# EUROPEAN PATENT SPECIFICATION

(11) **EP 2 939 761 B1**
(45) Date of publication and mention of the grant of the patent: **27.02.2019**
(21) Application number: 13869543.2
(22) Date of filing: 26.12.2013
(51) Int. Cl.: B22F 1/00, B22F 5/00, B22F 9/20, C22C 1/04, C22C 27/02, H01G 9/052

(54) **PRODUCTION METHOD FOR A NIOBIUM GRANULATED PRODUCT, PRODUCTION METHOD FOR A SINTERED BODY, PRODUCTION METHOD FOR A CHEMICAL CONVERSION BODY FOR NOBIUM CAPACITOR POSITIVE ELECTRODE AND PRODUCTION METHOD FOR A CAPACITOR**
HERSTELLUNGSVERFAHREN EINES GRANULIERTEN PRODUKTS AUF BASIS VON NIOBIUM, HERSTELLUNGSVERFAHREN EINES GESINTERTEN KÖRPERS, HERSTELLUNGSVERFAHREN EINES CHEMISCHEN UMWANDLUNGSKÖRPERS FÜR POSITIVE ELEKTRODE EINES NIOBIUMKONDENSATORS UND HERSTELLUNGSVERFAHREN EINES KONDENSATORS
PROCÉDÉ DE FABRICATION D'UN PRODUIT GRANULÉ À BASE DE NIOBIUM, PROCÉDÉ DE FABRICATION D'UN CORPS FRITTÉ, PROCÉDÉ DE FABRICATION D'UN CORPS DE CONVERSION CHIMIQUE POUR ÉLECTRODE POSITIVE DE CONDENSATEUR ET PROCÉDÉ DE FABRICATION D'UN CONDENSATEUR

(30) Priority: 27.12.2012 JP 2012284217
(43) Date of publication of application: 04.11.2015
(73) Proprietor: Showa Denko K.K., Tokyo 105-8518 (JP)
(72) Inventor: SHIBUYA Yoshinori, Tokyo 105-8518 (JP); TSUMITA Yasuo, Tokyo 105-8518 (JP); KAWASAKI Toshiya, Tokyo 105-8518 (JP)
(74) Representative: Strehl Schübel-Hopf & Partner
(86) International application number: PCT/JP2013/084850
(87) International publication number: WO 2014/104178

(56) References cited:
- EP-A1- 1 568 426
- WO-A1-2004/045794
- JP-A- 2003 514 378
- JP-A- 2005 277 301
- JP-A- 2005 277 301
- US-A1- 2002 064 476
- US-A1- 2003 112 577
- US-A1- 2006 260 437
- T.B. Massalski: "Binary Alloy Phase Diagrams AC-AU to FE-RH Vol. 1" In: "American Society for Metals", 30 October 1987 (1987-10-30), XP055288877, page 139, * page 139 *

## Description

### Technical Field

The present invention relates to a production method for a niobium granulated product, a production method for a niobium sintered body, a production method for a chemical conversion body for a niobium capacitor, and to a production method for a niobium capacitor. The niobium granulated product obtained in the present invention has high binding strength, and thus a capacitor having large electrostatic capacitance can be obtained by using as an anode a chemical conversion body obtained by forming a dielectric layer on a sintered body made of the granulated product.

### Background Art

In recent years, an electronic device such as a mobile phone or a computer has been reduced in size. Along with this, also an electronic component has been required to be reduced in size, and a tantalum electrolytic capacitor has gained larger capacity. The same thing can be said for a niobium electrolytic capacitor, and there have been made studies for increasing a specific surface area of a niobium granulated product in order to attain larger capacity.

The primary particles of the granulated product are reduced in size in order to achieve a larger surface area. Therefore, a binding portion between the primary particles becomes thinner, resulting in a reduction in binding strength of a granulated product in which several hundreds of primary particles are aggregated. As a result, in a stage in which the granulated product has been formed, voids formed in the particles are filled with the primary particles that have lost their binding state. This reduces a porous portion and a specific surface area, and finally reduces electrostatic capacitance of an element.

In addition, while a solid electrolytic capacitor is produced by sintering the porous body and subjecting it to chemical conversion, attaching a cathode material thereto, and mounting the resultant in a frame, followed by resin sealing, the granulated product is physically damaged by heat and pressure in the resin sealing stage in the case where the granulated product has small binding strength. This leads to an increase in leakage current or establishment of continuity, and performance as a capacitor is not exhibited.

Many studies have been made to solve these problems and there are many study examples particularly on niobium-aluminum alloys.

JP 48-25859 A (Patent Document 1) discloses an example in which an electrolytic capacitor is produced from a molded and sintered product obtained from a mixture of tantalum powder or niobium powder and aluminum fluoride and is measured for its capacity. The document discloses that the invention has an effect of maintaining porosity at the time of sintering to thereby prevent capacity loss. But it also discloses that when there is an oxide such as metal aluminum having a low vapor pressure on the surface of the sintered body, the oxide does not vaporize at the time of sintering to thereby prevent porosity of the sintered body.

WO 2004/045794 publication (US 2006/114644 A1) (Patent Document 2) proposes a niobium-aluminum allow powder to increase the surface area, and discloses a granulated product having an increased surface area using the dendritic matrices of the niobium-aluminum alloy. However, the conditions for forming an appropriate dendritic matrices (dendritic crystals) are cumbersome. Although it has a description that "sintered elements had a CV value and breaking voltage greater than those of elements made from a tantalum granulated product", it does not disclose the data of elements made from a tantalum granulated product and the document lacks detail or specifics.

Japan Patent No. 4178519 (Patent Document 3) discloses a method for producing a niobium-alloy granulated product by mixing aluminum powder into an aluminum-containing niobium powder produced by the aluminothermic method and heating the mixture under a non-oxidizing atmosphere. The document indicates that the buckling strength of the element increases and leakage current reduces due to the effect of aluminum but has no description of the capacitance.

WO 2002/015208 publication (EP 1 324 359) (Patent Document 4) teaches that the anode body comprising a niobium granulated product containing Al in an amount of 1 mol% has a capacitance of 114,000 µF•V/g, while the anode body comprising a niobium granulated product containing no aluminum produced by the same method has a capacitance of 87,000 µF•V/g. However, it teaches in the specification that it is known that although aluminum is a valve-acting metal, it has a permittivity lower than niobium; and the aluminum-containing niobium has a permittivity lower than pure niobium based on simple mean values. Thus, the document does not have detailed description on the increase in the capacitance.

### PRIOR ART

### Patent Documents

Patent Document 1: JP S48-25859 A
Patent Document 2: WO 2004/045794 (US 2006/114644 A1)
Patent Document 3: Japanese Patent No. 4178519
Patent Document 4: WO 2002/015208 (EP 1 324 359)
   JP 2005277301 A discloses a conversion body comprising a niobium sintered body having a dielectric layer on its surface; US 2006/260437 A1 discloses a production method for a niobium granulated product from a niobium hydride.
   EP 1568426 A1 discloses a production method for a niobium powder from an Nb-Al alloy powder.

### DISCLOSURE OF THE INVENTION

### Problems to be Solved by the Invention

The present invention aims to solve the above-mentioned problems in a niobium capacitor and to provide a production method of a chemical conversion body for an anode of a capacitor which has high binding strength and high capacitance, while maintaining a specific surface area and varying little in capacitance.

### Means to Solve the Problem

As a result of diligent studies, the inventors of the present invention have found that the above-mentioned problems can be solved by using a chemical conversion body comprising a niobium granulated product obtained by a method comprising: mixing niobium hydride and a niobium-aluminum intermetallic compound; pulverizing the resultant mixture, subjecting the mixture to heat treatment to allow the mixture to aggregate to form a granulated product; in which the sites of aluminum localization are scattered on the surface. Thus, the present invention has been accomplished.

The present invention provides the following.
[1] A production method for a niobium granulated product, comprising:
   mixing niobium hydride and a niobium-aluminum intermetallic compound, pulverizing the resultant mixture, subjecting the mixture to heat treatment to allow the mixture to aggregate to form a granulated product.
[2] The production method for a niobium granulated product according to [1], in which the niobium-aluminum intermetallic compound is one or more members selected from Nb₂Al, Nb₃Al and Nb₇Al.
[3] The production method for a niobium granulated product according to [1] or [2], in which the atom ratio between the niobium atoms and the aluminum atoms in the total mass of the niobium hydride and the niobium-aluminum intermetallic compound to be mixed is within a range of 9:1 to 90:1.
[4] The production method for a niobium granulated product according to any one of [1] to [3], in which the atom ratio between the niobium atoms and the aluminum atoms in the niobium granulated product is within a range of 25:1 to 90:1.
[5] The production method for a niobium granulated product according to any one of [1] to [4], using as a raw material niobium hydride which passed through a sieve having a mesh size of 1 mm.
[6] The production method for a niobium granulated product according to any one of [1] to [5], using as a raw material a niobium-aluminum intermetallic compound which passed through a sieve having a mesh size of 1 mm.
[7] The production method for a niobium granulated product according to any one of [1] to [6], comprising pulverizing the mixture of niobium hydride and a niobium-aluminum intermetallic compound so as to have a D50 value measured by the laser diffraction-type particle size distribution analyzer of 0.7 µm or less.
[8] The production method for a niobium granulated product according to any one of [1] to [7], using a stirring ball mill at the time of mixing niobium hydride and a niobium-aluminum intermetallic compound.
[9] A production method for a sintered body, comprising:
   obtaining a niobium granulated product by the production method claimed in any one of [1] to [8]; and
   sintering the granulated product.
[10] A production method for a chemical conversion body for a capacitor, comprising:
   obtaining a sintered body by the production method claimed in [9]; and
   subjecting the sintered body to electrolytic oxidation to form a dielectric layer on a surface thereof.
[11] A production method for a capacitor, comprising forming a cathode on the dielectric layer on the surface of the chemical conversion body produced by the method claimed in [10].

### Effects of the Invention

According to embodiments of the present invention, the binding strength of the niobium granulated product is improved; an element obtained by molding the granulated product retains the porous form and specific surface area of the granulated product; and a capacitor varying little in capacitance is obtained. This is due to the fact that a niobium-aluminum intermetallic compound as a raw material of a mechanical alloy is compatible with niobium, and hydrogen existing in the niobium lattice becomes a starting point of embrittlement, facilitating the welding of a niobium-aluminum intermetallic compound to the active parts in which hydrogen is partially desorbed from the fracture surface generated by milling; and that the welded parts between the particles are reinforced by the thermal fusion bonding between niobium particles by means of the heat treatment with the diffusion of aluminum on the surface, resulting in the formation of a solid network.

Furthermore, since aluminum is a valve-acting metal, when the sintered body element produced by using the above granulated product is subjected to electrolytic formation, a dielectric film comprising niobium and aluminum is formed evenly and continuously on the surface of the element. As a result, oxygen transfer in an oxide film, which is characteristic in a niobium oxide film, is suppressed due to the aluminum oxide film, and it can thin the effective oxide film thickness which exerts permittivity to thereby increase the capacitance.

### Brief Description of Drawings

FIG. 1 is a TEM photograph of a cross section of a chemically modified element of Example 2.
FIG. 2 is a photograph showing distribution of a Nb Kα line in the cross section of the chemically modified element of Example 2 by EDX.
FIG. 3 is a photograph showing distribution of an Al kα line in the cross section of the chemically modified element of Example 2 by EDX.
FIG. 4 is a photograph showing distribution of an O kα line in the cross section of the chemically modified element of Example 2 by EDX.
FIG. 5 is a TEM photograph of a cross section of a chemically modified element of Comparative Example 5.
FIG. 6 is a photograph showing distribution of a Nb kα line in the cross section of the chemically modified element of Comparative Example 5 by EDX.
FIG. 7 is a photograph showing distribution of an Al kα line in the cross section of the chemically modified element of Comparative Example 5 by EDX.
FIG. 8 is a photograph showing distribution of an O kα line in the cross section of the chemically modified element of Comparative Example 5 by EDX.

### Mode for Carrying out the Invention

A chemical conversion body obtained in the present invention is a chemical conversion body formed of a niobium granulated product obtained by a production method comprising: mixing niobium hydride and a niobium-aluminum intermetallic compound; pulverizing the mixture; subjecting the mixture to heat treatment to allow the mixture to aggregate to form granulated particles. The chemical conversion body is characterized in that the sites of aluminum localization are scattered on the surface of the dielectric layer.

As niobium hydride as a raw material, one obtained by heating a niobium ingot in a hydrogen atmosphere to allow the niobium ingot to absorb hydrogen is generally used. However, a production method for the raw material is not limited as long as niobium powder subjected to hydrogen embrittlement is obtained, and there may be used: one obtained by reducing a niobium fluoride with sodium to obtain reduced niobium powder, followed by washing the reduced niobium powder with an acid containing hydrofluoric acid to remove impurities and concurrently allow the niobium powder to absorb hydrogen; one obtained by subjecting niobium oxide to magnesium deoxidation treatment to obtain deoxidized niobium powder, followed by washing the deoxidized niobium powder with an acid to remove magnesium as a reducing agent, and then further washing the deoxidized niobium powder with hydrofluoric acid to allow the niobium powder to absorb hydrogen; or the like.

It should be noted that niobium powder having a low degree of hydrogen absorption or niobium powder subjected to vacuum heat treatment to be dehydrogenated loses brittleness and exhibits ductibility, and hence is often deformed into a flat shape without being finely powdered in pulverization (milling) in a subsequent step. The powder in such shape is difficult to granulate. With a view to achieving hydrogen embrittlement, it is desired that the concentration of hydrogen in niobium hydride be from 0.4 to 1.0%, preferably from 0.7 to 1.0%.

A niobium-aluminum intermetallic compound as another raw material tends to be crystallized because it has a constant composition, and therefore it requires ingenuity particularly when a niobium-aluminum alloy is used as a superconducting wire material. The property is convenient for the present method, and fine powdering can be conducted without embrittlement treatment at the time of milling. Examples of the niobium-aluminum intermetallic compound include Nb₃Al, Nb₂Al and Nb₇Al, and it is desirable to use Nb₃Al or Nb₂Al. When metal aluminum is used as a raw material, the powder is not finely pulverized because metal aluminum differs from niobium in the specific gravity and has difficulty in embrittlement treatment. Also, due to the great difference in the melting point, only an aluminum component evaporates at the time of the heat treatment process, and metal aluminum causes a reaction with niobium involving desorption of oxygen in the natural oxide film and is not to be alloyed. Accordingly, the effect according to the present method is not obtained.

As a first stage, a mechanical alloy is formed from the two kinds of materials. Mechanical alloying is an established technology including a milling using a ball mill, a method using a rolling mill and a method using a forging machine. It is desirable to employ a stirring ball mill method, which enables fine powdering and alloying the raw materials at the same time.

Examples of stirring ball mill includes an attrition ball mill, and preferred is a bead mill which enables controlling by the bead diameter, an amount of the packed beads, a stirring rate, a pulverization rate and the like.

A case of using a bead mill is hereinafter described in detail.

The raw material particles are used after being allowed to pass through a sieve having an opening of 1 mm. It is desired that beads to be used in the bead mill each have a diameter of from 0.3 to 3 mm, and it is preferred to perform coarse pulverization with 3-mm beads and perform fine pulverization with 0.5-mm beads. When the raw material particles each have a particle diameter of more than 1 mm, the beads for pulverizing the particles are increased in diameter, and hence a dead space in the mill is increased, resulting in inefficient pulverization. In addition, it is desired to exchange the beads to ones having a smaller diameter at the time when the average particle diameter of the material reaches several micrometers, because the achievement of pulverization depends on the bead diameter.

The amount of the beads to be loaded is preferably from 60 to 90%. When the loaded amount is less than 60%, the number of collisions between the beads and the raw materials is reduced, resulting in poor pulverization efficiency. When the loaded amount exceeds 90%, the number of the collisions is excessively increased, and a device stops owing to an excessive load.

A stirring speed is preferably from 20 to 30 Hz. When the stirring speed is less than 20 Hz, the collision speed between the beads and the raw materials is reduced, resulting in poor pulverization efficiency. When the stirring speed exceeds 30 Hz, the collision speed is excessively increased, and the device itself is damaged.

A pulverization rate is preferably approximately from 0.7 to 1.3 kg/h, while the pulverization rate depends on the capacity of the device. When the amount of the materials is small with respect to the capacity of the device, the pulverization proceeds in a short time, and the mixing is insufficient at the time when a desired average particle diameter is achieved. When the amount of the materials is large with respect to the capacity of the device, the materials stay in the device for a longer time, and hence an impurity component derived from the device is increased. Therefore, it is preferred to set the pulverization rate within the above-mentioned range.

The completion point of the pulverization is judged by determining the average particle diameter of the materials. As the most rapid and simple method, a method using a laser diffraction particle size distribution analyzer is recommended. The pulverization time period and the average particle diameter have an exponential relationship, and hence the operation can be performed efficiently by sampling the materials at constant time intervals during the milling, and determining a D50 value, which is an average particle diameter, to thereby preliminarily approximately calculate a pulverization time period required to achieve a desired primary particle diameter.

With respect to the atmosphere at the time of milling, the milling is conducted in a wet atmosphere from the viewpoint of ease in handling because the material after the treatment becomes a fine powder. Examples of the dispersion solvent include water, an organic solvent and liquid gas. It is preferable to use water which enables continuous feeding of the raw material into a bead mill and discharging it during the pulverization, and facilitates the handling the material by making the material into a slurry.

The slurry of the mechanical alloy after the milling is the aggregate of primary particles. Accordingly, when a dispersion medium is directly removed from the slurry, the particles are closely packed and entirely unified in this state through the heat treatment and does not meet requirements as the niobium granulated product. Therefore, there is a need to appropriately granulate the particles. In addition, at this time, a pore forming agent may be used with no limitation so that the particles after the heat treatment become porous.

The pore forming agent is preferably a substance that has no reactivity to the mechanical alloy, can be easily removed, can be added directly to the slurry, and is in the form of fine particles having an average particle diameter of from 0.5 to 5 µm. Examples of the pore forming agent include a metal oxide, an inorganic salt, and an organic compound. An example of the metal oxide is, for example, calcium oxide. An example of the inorganic salt is ammonium chloride. An example of the organic compound is camphor. Of those, an alkaline earth metal oxide (such as calcium oxide and magnesium oxide) is preferred because the alkaline earth metal oxide is not evaporated through the heat treatment by virtue of a high melting point and is easily removed by, for example, washing with an acid.

Granulation is performed in order to improve the physical property values of powder. Production steps for a capacitor include a step of processing material powder into a green compact with a molding machine. In this step, it is necessary that the powder shows no change in its properties (powder flowability and binding strength) in the molding machine, and is easy to transport. Whereas non-granulated powder is in the form of aggregated particles having an indefinite shape and exhibits poor flowability, granulated powder is preferred in terms of the molding because of its round shape and good flowability. In addition, when the granulated product has low binding strength, it gives rise to fine particles, in which several primary particles are aggregated, resulting in causing a reduction in flowability, and die leakage and die galling in the molding machine. To perform granulation is preferable also for the reason that the granulated product has such a shape that the primary particles are prevented from being chipped away.

In a second stage, the raw materials (mechanical alloy) after the granulation are subjected to heat treatment. With this, the particles are brought into close contact with each other through heat diffusion at an atomic level to promote the alloying and aging alloy. At the same time, the contact portions of the particles undergo diffusional growth and thus bonding strength of the sintered body is increased. The heat treatment temperature in this case needs to be equal to or higher than a temperature at which atoms of the raw materials start diffusing. When the temperature is too high, diffused atoms are to reduce surface energy, resulting in a reduction in specific surface area. This directly leads to a reduction in the electrostatic capacitance of an anode body obtained from the granulated product. Therefore, the conditions of the heat treatment are naturally determined by appropriately setting the electrostatic capacitance.

In the heat treatment, some substances have a melting point lower than the heat treatment temperature, and performing heat treatment for a long period of time has an effect of purifying the materials by evaporating the impurities contained in the raw materials. This also means that it is difficult to proceed with alloying of the substances having a great difference in the melting point by the heat treatment.

In the present invention, it is presumed that the change of a substance in the mechanical alloy proceeds as follows.
(1) Hydrogen of the niobium hydride is desorbed from niobium.
(2) The niobium-aluminum intermetallic compound and niobium from which hydrogen was desorbed diffuse with each other. (3) Aluminum is made into an amorphous state in the crystal lattice of niobium.
Niobium has a melting point of 2,469°C and a niobium-aluminum intermetallic compound, for example, Nb₃Al has a melting point of 2,060°C. The Tammann temperature, as a guide of the temperature at which an element starts to diffuse in a solid is 632°C for niobium and 497°C for a niobium-aluminum intermetallic compound. Accordingly, it is necessary to perform the hydrogen desorption at a temperature lower than 497°C, while a temperature higher than 632°C is required for promoting and aging alloy.

For the above reason, alkali metal and alkaline earth metal are not suitable as a substance to be used for an alloy. Even in the case of using pure aluminum, it is difficult to be employed in the method of the present invention because the melting point of pure aluminum is 660°C. Among the aluminum compounds, the effect of the present invention is not observed in the case of using aluminum oxide because a mechanical alloy is not formed between the metal and the ceramic.

There is no particular limit on the production method of the materials of the niobium-aluminum intermetallic compound used in the present invention. A niobium-aluminum wire material for the superconducting materials may be used, or a powder compact of niobium and aluminum adjusted to have a required composition by means of arc melting and electron beam melting may be used.

After the completion of the heat treatment, the alloy is in the form of an aggregate, and hence is crushed into a granular form by an appropriate method, and its particle size distribution is adjusted. As a crusher, a roll granulator, a pin mill, a speed mill, or the like may be used. In addition, the particle size may be adjusted by using a sieve in combination so that the granulated product achieves a particle size distribution falling within a required range. At this time, fine particles result from broken pieces of the crushed particles and have a large influence on physical property values associated with the dynamic characteristics of the granulated product, such as an angle of repose and flowability. Therefore, it is desired to adjust the particle size particularly with respect to the fine particles.

In the case where the alloy particles after pulverization contain a pore forming agent, it is desirable to remove the pore forming agent in this stage. In the case where the pore forming agent is an inorganic salt, it is removed with an appropriate solvent. In the case where the pore forming agent is an oxide, it is removed with an appropriate acid, alkali, or chelate agent. Reaction heat is often generated along with the removal, and in this case, the surface of alloy may be oxidized because both of niobium and aluminum are valve-acting metal and have high affinity for oxygen. The temperature of the dissolution and removal is preferably lower than 50°C, particularly preferably from 0 to 30°C. After the removal, an excessive solvent is washed with water, alcohol, or the like. In the case where the pore forming agent is an organic compound, the pore forming agent is decomposed through the heat treatment and already removed from the particles. However, it is desired to once perform washing with an appropriate solvent, because fine particles can be further removed by an elutriation effect of the washing.

After the washing, the solvent is removed from the particles with a dryer. For the drying, a general vacuum dryer may be used with no limitation. In the case where the solvent is water, the temperature of the drying is desirably lower than 50°C until the water is sufficiently vaporized. The time period of the drying is shortened by removing the water with a water-soluble organic solvent in advance. While the pressure in the dryer reduces when the solvent is vaporized, it is desired to increase the temperature to 50°C or higher at the time when bumping does not occur. In addition, by increasing the temperature while adopting a nitrogen atmosphere in the dryer, the surfaces of alloy particles can be nitrided, which provides an antioxidant effect.

The particles thus obtained can be used as an aluminum-containing niobium granulated product in a facility using a general niobium granulated product for a capacitor or a tantalum granulated product for a capacitor, such as a molding device, a sintering device, a chemical conversion device, an impregnation device, a paste application device, a frame mounting device, and a sealing device, with no particular limitation.

### Examples

The present invention is hereinafter described in detail by way of Examples and Comparative Examples.

The analysis methods of the properties in tables are as follows.

The conditions of analysis methods for the chemical analysis values (contents of oxygen and aluminum), specific surface area, bulk density, and index of powder binding strength of granulated products of Examples and Comparative Examples, and for the electrostatic capacitance and sintered body strength of anode bodies of Examples and Comparative Examples are described below.

Chemical analysis values: Oxygen and aluminum niobium were quantitatively determined with an inductively coupled plasma (ICP) emission spectrophotometer after a sample was dissolved in hydrofluoric acid.

Specific surface area (m²/g): The specific surface area was measured with a BET-type surface area measuring device (manufactured by QUANTCHROME).

Bulk density (g/cm³): The bulk density was measured with a bulk density measuring device in accordance with JIS Z 2504.

Index of powder binding strength: A treated sample obtained by dispersing the sample in pure water and treating the resultant with an ultrasonic homogenizer having an output power of 200 W for 3 minutes, and an untreated sample were each measured for its particle size distribution with a laser diffraction particle size analyzer. In the portion where the graph form of the treated sample and that of the untreated sample overlapped in the graph of the particle size distribution, the ratio of the area of the treated sample to the area of the untreated sample was defined as the index of powder strength.

Particle size distribution: The particle size distribution was measured by a laser diffraction scattering method using HRA9320-X100 manufactured by Microtrac Inc.

Average particle diameter (D50): A particle diameter corresponding to a cumulative volume percent of 50 vol% in the particle size distribution measured as described above was defined as an average particle diameter (D50).

Electrical characteristics: The electrostatic capacitance (pFV/g) was measured by using platinum black electrodes and 30% sulfuric acid as a measurement liquid, at a bias voltage of 1.5 V at 120 Hz. Electrical characteristics after heating: From simulation of a reflow furnace for soldering a capacitor to a substrate, a chemical conversion body was heated at 260°C for 20 minutes, left to be cooled, and then measured for the electrostatic capacitance.

Sintered body strength (N/mm²): A sintered body element having a rectangular parallelepiped shape in which an anode terminal wire was embedded was placed so that surfaces parallel to the embedded wire and having smaller areas were arranged to be a top face and a bottom face. The element was compressed with a digital force gauge manufactured by Imada Co., Ltd. and a value at the time of buckling failure was determined. A value obtained by dividing the value of buckling failure by the area of the top or bottom face of the element was defined as the sintered body strength.

### Example 1:

A niobium hydride aggregate prepared by allowing a niobium ingot to absorb hydrogen was pulverized with an impact mill, and then classified with a gyro sifter using a sieve having an opening of 1 mm. Niobium hydride particles that passed through the sieve were used as a raw material in the following steps. At this time, the concentration of hydrogen in the niobium hydride particles was found to be 0.95%.

As a niobium-aluminum intermetallic compound, commercially available Nb₃Al (Al concentration: 23.9 mol%) (produced by Kojundo Chemical Laboratory Co., Ltd.) having a purity of 99.9% and an average particle diameter of 500 µm) was used.

Both were mixed with each other and concurrently mechanical alloying and fine pulverization with a bead mill using pure water as a dispersion medium were performed. The setting conditions of the bead mill were as follows: zirconia beads each having a diameter of 3 mm were used; the amount of the beads to be loaded was set to 80%; and the number of stirring revolutions was set to 25 Hz. Niobium hydride and a niobium-aluminum intermetallic compound were prepared so that the amount of niobium in terms of a pure component was 10 kg in total, and the content of aluminum component was 1 mass% with respect to niobium. The mixture was subjected to wet pulverization at a concentration of slurry of 50% for 3 hours. 2 hours later, the average particle diameter was measured with a laser diffraction particle size analyzer, and found to be 2.4 µm in terms of the D50 value. Next, the beads were changed to silicon nitride beads each having a diameter of 0.5 mm, and the pulverization was continued until the D50 value reached 0.5 µm. 6 hours later, the mechanical alloy-dispersed slurry was recovered at the time when the D50 value reached 0.51 µm.

Next, 5 kg of calcium oxide having an average particle diameter of 1 µm was added as a pore forming agent to the slurry of the mechanical alloy, followed by sufficient stirring. Then, the resultant was loaded in a horizontal stirring granulator, and granulated and dried at a jacket temperature of 50°C under reduced pressure. 8 hours after the loading, a granulated and dried aggregate having a diameter of from 2 to 3 mm was obtained. The granulated and dried aggregate was moved onto a heat-resistant plate and subjected to heat treatment to promote alloying of the mechanical alloy at an atomic level. Hydrogen contained in the raw materials was sufficiently desorbed at 400°C in the course of temperature increase, and the temperature was retained at a maximum reaching temperature of 1,100°C for 600 minutes to complete fusion of the particles and alloying.

The alloy aggregate after the heat treatment was gradually oxidized so that the alloy aggregate was prevented from igniting. The alloy aggregate was taken out and then crushed to achieve an average particle diameter of about 100 µm with a roll granulator.

Further, the crushed powder was washed with nitric acid to dissolve and remove calcium oxide remaining in the particles, and thus pores were formed. After the completion of the dissolution reaction, the crushed powder was washed with pure water by decantation and fine particles dispersed therein were removed by water flow. Then, needed granulated particles of aluminum-containing niobium powder were recovered. Finally, the granulated particles were moved into a container, dried at 50°C under reduced pressure, and then dried at 250°C to obtain a sample of a granulated product. The physical properties of the sample are shown in Table 1.

### Comparative Example 1:

A granulated product was obtained by the same procedure as in Example 1 except that a niobium-aluminum intermetallic compound was not used and only the niobium hydride particles were used. The physical properties of the sample are shown in Table 1.

### Comparative Example 2:

A granulated product was obtained by the same procedure as in Example 1 except that a thermally-reactive alumina powder having a particle diameter of about 1 µm was used instead of a niobium-aluminum intermetallic compound, and the powder was mixed with the niobium hydride particles so as to adjust the content of aluminum to 1 mass% with respect to niobium. The physical properties of the sample are shown in Table 1.

### Comparative Example 3:

100 g of niobium ingot and 3 g of aluminum were prepared and thereby melted and solidified twice in an arc melting furnace to produce a niobium aggregate in which aluminum was uniformly dispersed. After allowing the niobium ingot to absorb hydrogen, the niobium ingot was pulverized with an impact mill, and then classified using a sieve having an opening of 1 mm. The concentration of the aluminum-containing niobium hydride particles that passed through the sieve were was found to be 0.96%.

Using the aluminum-containing niobium hydride particles as a raw material, a granulated product was obtained by the same procedure as in Example 1. The physical properties of the granulated product are shown in Table 1.

**Table 1**

| | Chemical analysis values | | Specific surface area [m²/g] | Bulk density [g/cm³] | Index of powder binding strength |
|---|---|---|---|---|---|
| | O [%] | Al [ppm] | | | |
| Example 1 | 6.3 | 4700 | 3.57 | 1.11 | 0.74 |
| Comparative Example 1 | 5.1 | Not detected | 3.05 | 1.11 | 0.64 |
| Comparative Example 2 | 5.8 | 6500 | 3.25 | 1.10 | 0.45 |
| Comparative Example 3 | 5.9 | 5100 | 3.74 | 1.11 | 0.41 |

### Example 2:

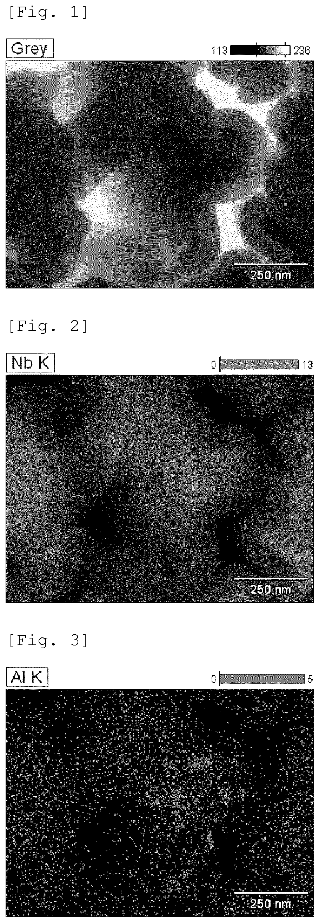

Camphor in an amount of 3 mass% was mixed in the sample obtained in Example 1, and the mixture was formed into a niobium molded body with an automatic element molding machine. A niobium wire was planted in the center of the element, and the molded body was adjusted to have a volume of about 20 mm³ and a density of about 3.0 g/cm³. The element was placed in a vacuum sintering furnace and retained at a degree of vacuum of 10⁻³ Pa or less and a maximum temperature of 1,230°C for 30 minutes to produce a sintered body. Anodic oxidation was conducted at a current density of 200 mA/g and 20 V by using as an anode the sintered body and as an electrolyte a 1 mass% phosphoric acid aqueous solution at 90°C. The sintered body was retained for 3 hours at a constant voltage after the voltage reached 20 V to produce a chemical conversion element (anode body). The anode body was washed with flowing water and dried, and then subjected to the various tests. The electrical properties of the anode body are shown in Table 2. In addition, the anode body was cut, and observed with a transmission electron microscope (TEM). The elemental analysis by energy dispersive X-ray spectrometry (EDX) is shown in FIG. 1 to FIG. 4.

### Comparative Example 4:

Anode bodies were produced by the same steps as in Example 2 except that the samples of a granulated product obtained in Comparative Example 1 was used instead of the sample in Example 2, and subjected to the various tests. The electrical properties of the anode body are shown in Table 2.

### Comparative Example 5:

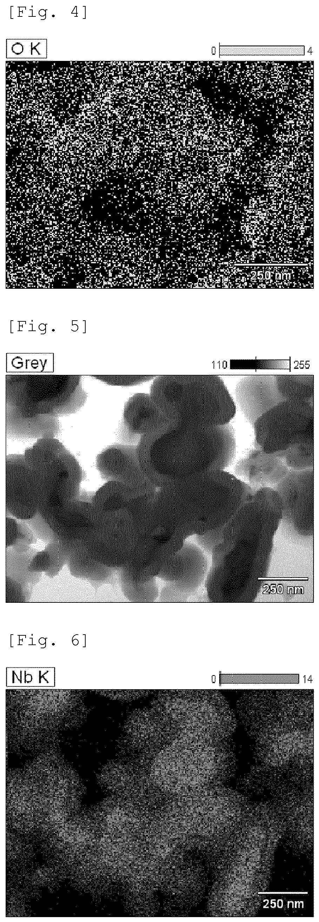

Anode bodies were produced by the same steps as in Example 2 except that the samples of a granulated product obtained in Comparative Example 2 was used instead of the sample in Example 2, and subjected to the various tests. The electrical properties of the anode body are shown in Table 2. The anode body was cut and observed with a transmission electron microscope (TEM). The element distribution by energy dispersive X-ray spectrometry (EDX) is shown in Fig. 5 to Fig. 8, respectively.

### Comparative Example 6:

Anode bodies were produced by the same steps as in Example 2 except that the samples of a granulated product obtained in Comparative Example 3 was used instead of the sample in Example 2, and subjected to the various tests.

**Table 2**

| | Electrostatic capacitance [µFVg⁻¹] | | Increase rate of the capacitance | Strength of the sintered body [N/mm^{2]} |
|---|---|---|---|---|
| | Normal measurement | Measurement after heating | After heating/normal | |
| Example 2 | 177,000 | 191,000 | 1.08 | 128.38 |
| Comparative Example 4 | 135,000 | 154,000 | 1.14 | 105.84 |
| Comparative Example 5 | 141,000 | 170,000 | 1.21 | 131.32 |
| Comparative Example 6 | 147,000 | 166,000 | 1.13 | 123.48 |

As is apparent from the measurement results in Table 1, in the samples containing aluminum in Example 1, Comparative Example 2 and Comparative Example 3, the concentration of aluminum was reduced to about half of that in the initial loaded amount. This indicates that about half of the aluminum was detached or not alloyed. The aluminum component remaining in the granulated product inhibits the surface diffusion of niobium and the heat treatment is completed in a state that the granulated product has a high surface energy. Therefore, the granulated products of Comparative Example 2 and Comparative Example 3 have a higher oxygen concentration and a larger specific surface area compared to those of Comparative Example 1. With respect to the index of powder binding strength, the granulated product of Example 1 has a higher value compared to other examples. This indicates that in addition to the fusion bonding of the niobium particles to each other, the niobium-aluminum intermetallic compound serves as a bonding aid and has an effect that outweighs the inhibition of the surface diffusion of niobium due to the aluminum component. Comparative Example 2 shows that the ceramic component does not work as a bonding aid in the heat treatment under the temperature condition of the example. In Comparative Example 3, it is presumed that aluminum does not work as a bonding aid because it is uniformly distributed.

The measurement results in Table 2 shows that Example 2 according to the method of the present invention can attain a larger electrostatic capacitance than Comparative Examples 4 to 6. It should be noted that the increase rate of the capacitance in the measurement after the heating, which is specific to a niobium capacitor, is kept low in Example 2. This is thought to be caused by the condition that oxygen which can transfer in the oxide film and is a factor for the instability of the dielectric conversion film is trapped by aluminum. In Example 2, since the sample inherently contains a small amount of the dielectric body component, which is brought by the oxygen that can transfer in the conversion film, the effective dielectric film thickness of Example 2 is thinner compared to the conversion film in Comparative Example 4. However, the electrostatic capacitance increases by an amount equal to the decrease due to the trapping of aluminum. In Comparative Example 6, the dielectric body component is uniformly generated since aluminum is uniformly distributed in niobium, and the permittivity of the aluminum conversion film is lower than that of the niobium conversion film. As a result, the increase in the electrostatic capacitance due to aluminum is not observed.

FIGS. 1 to 4 and FIGS. 5 to 8 are photographs obtained by observing the chemical conversion bodies of Example 2 and Comparative Example 5, respectively. FIGS. 1 and 5 are photographs of cross sections of the chemical conversion elements of Example 2 and Comparative Example 5, respectively, taken with a transmission electron microscope (TEM) (at a magnification of 200,000). FIGS. 2 to 4 are photographs showing distribution of a Nb Kα line, an Al Kα line and an O Kα line, respectively, in the cross section of the chemically modified element of Example 2 by energy dispersive X-ray spectrometry (EDX) (at a magnification of 200,000). FIGS. 6 to 8 are photographs showing distribution of a Nb Kα line, an Al Kα line and an O Kα line, respectively, in the cross section of the chemically modified element of Comparative Example 5 by EDX (at a magnification of 200,000).

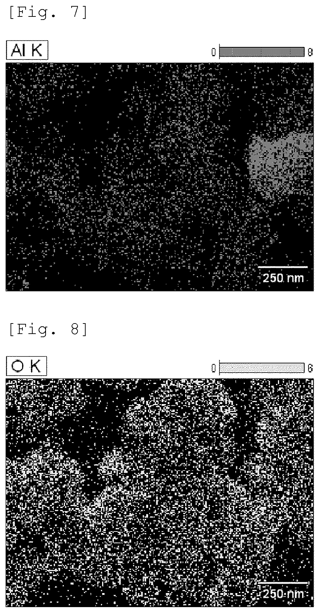

The thickness of the conversion film was actually measured at five points using the scale in the SEM images in FIG. 1 and FIG. 5, and when the conversion constant is calculated by dividing the average value of the conversion film thickness by the conversion voltage, the conversion constant was 32 Å/V in both of Example 2 and Comparative Example 5 and is consistent. From this, one can say that there is no difference in the conversion film between the two, and it is confirmed that the increase in the capacitance is not due to the change in the thickness of the conversion film. When comparing FIGS. 2 to 4 and FIGS. 6 to 8, while the sites of aluminum localization are scattered on the surface of the dielectric layer in the element of Example 2, the distribution of aluminum in the element of Comparative Example 5 seems to be at a white noise level and localization sites are not observed. Furthermore, from the aluminum-enriched region and the region lacking niobium in around the center of the right half of the figures, it is confirmed that the aluminum remains as alumina. Also, from the comparison between FIG. 2 and FIG. 4 and between FIG. 6 and FIG. 8, while the oxygen distribution is relatively uniform in the element of Example 2, oxygen enrichment appears prominently in the conversion film of Comparative Example 5. The oxygen-enriched region is assumed to be due to the oxygen that can transfer the conversion film. The conversion body produced by the method of the present invention is characterized in that no oxygen-enriched region is observed despite that aluminum is partially enriched, and in that a conversion film is generated more uniformly compared to the conventional method.

## Claims

1. A production method for a niobium granulated product, comprising:
mixing niobium hydride and a niobium-aluminum intermetallic compound, pulverizing the resultant mixture, subjecting the mixture to heat treatment to allow the mixture to aggregate to form a granulated product.

2. The production method for a niobium granulated product according to claim 1, in which the niobium-aluminum intermetallic compound is one or more members selected from Nb₂Al, Nb₃Al and Nb₇Al.

3. The production method for a niobium granulated product according to claim 1 or 2, in which the atom ratio between the niobium atoms and the aluminum atoms in the total mass of the niobium hydride and the niobium-aluminum intermetallic compound to be mixed is within a range of 9:1 to 90:1.

4. The production method for a niobium granulated product according to any one of claims 1 to 3, in which the atom ratio between the niobium atoms and the aluminum atoms in the niobium granulated product is within a range of 25:1 to 90:1.

5. The production method for a niobium granulated product according to any one of claims 1 to 4, using as a raw material niobium hydride which passed through a sieve having a mesh size of 1 mm.

6. The production method for a niobium granulated product according to any one of claims 1 to 5, using as a raw material a niobium-aluminum intermetallic compound which passed through a sieve having a mesh size of 1 mm.

7. The production method for a niobium granulated product according to any one of claims 1 to 6, comprising pulverizing the mixture of niobium hydride and a niobium-aluminum intermetallic compound so as to have a D50 value measured by the laser diffraction-type particle size distribution analyzer of 0.7 µm or less.

8. The production method for a niobium granulated product according to any one of claims 1 to 7, using a stirring ball mill at the time of mixing niobium hydride and a niobium-aluminum intermetallic compound.

9. A production method for a sintered body, comprising:
obtaining a niobium granulated product by the production method claimed in any one of claims 1 to 8; and
sintering the granulated product.

10. A production method for a chemical conversion body for a capacitor, comprising:
obtaining a sintered body by the production method claimed in claim 9; and
subjecting the sintered body to electrolytic oxidation to form a dielectric layer on a surface thereof.

11. A production method for a capacitor, comprising forming a cathode on the dielectric layer on the surface of the chemical conversion body produced by the method claimed in claim 10.

## Patentansprüche

1. Herstellungsverfahren für ein granuliertes Niobprodukt, umfassend:
Mischen von Niobhydrid und einer intermetallischen Niob-Aluminium-Verbindung, Pulverisieren der resultierenden Mischung, Unterwerfen der Mischung einer Wärmebehandlung, damit die Mischung zu einem granulierten Produkt aggregiert werden kann.

2. Herstellungsverfahren für ein Niobgranulatprodukt nach Anspruch 1, bei dem die intermetallische Niob-Aluminium-Verbindung eine oder mehrere unter Nb₂Al, Nb₃Al und Nb₇Al ausgewählte Verbindungen ist.

3. Herstellungsverfahren für ein Niobgranulatprodukt nach Anspruch 1 oder 2, bei dem das Atomverhältnis zwischen den Niobatomen und den Aluminiumatomen in der Gesamtmasse des Niobhydrids und der zu mischenden Niob-Aluminium-Intermetall-Verbindung in einem Bereich von 9:1 bis 90:1 liegt.

4. Herstellungsverfahren für ein Niobgranulatprodukt nach einem der Ansprüche 1 bis 3, bei dem das Atomverhältnis zwischen den Niobatomen und den Aluminiumatomen im Niobgranulatprodukt in einem Bereich von 25:1 bis 90:1 liegt.

5. Herstellungsverfahren für ein Niobgranulatprodukt nach einem der Ansprüche 1 bis 4 unter Verwendung von Niobhydrid als Rohstoff, das ein Sieb einer Maschenweite von 1 mm passierte.

6. Herstellungsverfahren für ein Niobgranulatprodukt nach einem der Ansprüche 1 bis 5 unter Verwendung einer intermetallischen Niob-Aluminium-Verbindung als Rohstoff, die ein Sieb einer Maschenweite von 1 mm passierte.

7. Herstellungsverfahren für ein Niobgranulatprodukt nach einem der Ansprüche 1 bis 6, umfassend das Pulverisieren der Mischung aus Niobhydrid und einer intermetallischen Niob-Aluminium-Verbindung, so dass ein mittels Partikelgrößenverteilungsanalysator vom Laserbeugungstyp gemessener D50-Wert von 0,7 µm oder weniger erreicht wird.

8. Herstellungsverfahren für ein Niobgranulatprodukt nach einem der Ansprüche 1 bis 7 unter Verwendung einer Rührwerkskugelmühle zum Zeitpunkt des Mischens von Niobhydrid und einer Niob-Aluminium-Intermetallverbindung.

9. Herstellungsverfahren für einen gesinterten Körper, umfassend:
Erhalten eines granulierten Niobgranulatprodukts nach dem in einem der Ansprüche 1 bis 8 angegebenen Herstellungsverfahren; und
Sintern des granulierten Produkts.

10. Herstellungsverfahren für einen chemischen Umwandlungskörper für einen Kondensator, umfassend:
Erhalten eines Sinterkörpers nach dem in Anspruch 9 genannten Herstellungsverfahren; und
Unterziehen des gesinterten Körpers einer elektrolytischen Oxidation unter Bildung einer dielektrischen Schicht auf einer Oberfläche davon.

11. Herstellungsverfahren für einen Kondensator, umfassend das Bilden einer Kathode auf der dielektrischen Schicht auf der Oberfläche des nach dem in Anspruch 10 genannten Verfahren hergestellten chemischen Umwandlungskörpers.

## Revendications

1. Procédé de production d'un produit granulé au niobium, comprenant les étapes suivantes:
mélanger de l'hydrure de niobium avec un composé intermétallique de niobium et d'aluminium, pulvériser le mélange obtenu, et soumettre le mélange à un traitement thermique afin de permettre au mélange de s'agréger pour former un produit granulé.

2. Procédé de production d'un produit granulé au niobium selon la revendication 1, dans lequel le composé intermétallique de niobium et d'aluminium est composé d'un ou de plusieurs élément(s) sélectionnés parmi le Nb₂Al, le Nb₃Al et le Nb₇Al.

3. Procédé de production d'un produit granulé au niobium selon la revendication 1 ou 2, dans lequel le rapport atomique entre les atomes de niobium et les atomes d'aluminium dans la masse totale de l'hydrure de niobium et du composé intermétallique de niobium et d'aluminium à mélanger se situe à l'intérieur d'une gamme de 9:1 à 90:1.

4. Procédé de production d'un produit granulé au niobium selon l'une quelconque des revendications 1 à 3, dans lequel le rapport atomique entre les atomes de niobium et les atomes d'aluminium dans le produit granulé au niobium se situe à l'intérieur d'une gamme de 25:1 à 90:1.

5. Procédé de production d'un produit granulé au niobium selon l'une quelconque des revendications 1 à 4, qui utilise comme matière première de l'hydrure de niobium qui est passé à travers un tamis qui présente une taille de maille de 1 mm.

6. Procédé de production d'un produit granulé au niobium selon l'une quelconque des revendications 1 à 5, qui utilise comme matière première un composé intermétallique de niobium et d'aluminium qui est passé à travers un tamis qui présente une taille de maille de 1 mm.

7. Procédé de production d'un produit granulé au niobium selon l'une quelconque des revendications 1 à 6, comprenant la pulvérisation du mélange d'hydrure de niobium et d'un composé intermétallique de niobium et d'aluminium de manière à obtenir une valeur D50 mesurée par l'analyseur de distribution de taille de particule du type par diffraction laser de 0,7 µm, ou moins.

8. Procédé de production d'un produit granulé au niobium selon l'une quelconque des revendications 1 à 7, qui utilise un broyeur à boulets à agitation au moment du mélange de l'hydrure de niobium et d'un composé intermétallique de niobium et d'aluminium.

9. Procédé de production d'un corps fritté, comprenant l'obtention d'un produit granulé au niobium par le procédé de production selon l'une quelconque des revendications 1 à 8; et le frittage du produit granulé.

10. Procédé de production d'un corps de conversion chimique pour un condensateur, comprenant l'obtention d'un corps fritté par le procédé de production selon la revendication 9; et la soumission du corps fritté à une oxydation électrolytique de manière à former une couche diélectrique sur une surface de celui-ci.

11. Procédé de production d'un condensateur, comprenant la formation d'une cathode sur la couche diélectrique sur la surface du corps de conversion chimique produit par le procédé selon la revendication 10.
